# FASCICULE DE BREVET EUROPEEN

(11) **EP 1 611 068 B1**
(45) Date de publication et mention de la délivrance du brevet: **23.01.2013**
(21) Numéro de dépôt: 04758929.6
(22) Date de dépôt: 09.04.2004
(51) Int. Cl.: C04B 24/26, C04B 24/32, C04B 28/02, C04B 103/30

(54) **UTILISATION DE DISPERSANTS POUR AMELIORER LE MAINTIEN DE FLUIDITE DE BETON**
VERWENDUNG VON DISPERGIERMITTELN ZUR VERBESSERUNG DER BEIBEHALTUNG DER BETON-FLIESSFÄHIGKEIT
USE OF DISPERSANTS TO IMPROVE THE RETENTION OF FLUIDITY OF CONCRETE

(30) Priorité: 11.04.2003 FR 0304566
(43) Date de publication de la demande: 04.01.2006
(73) Titulaire: Chryso, 92440 Issy-Les-Moulineaux (FR)
(72) Inventeur: DUBOIS-BRUGGER, Isabelle, 69680 Chassieu (FR); GRATAS, Mathieu, 45300 Rouvres St. Jean (FR); MOSQUET, Martin, 38300 Bourgoin-Jallieu (FR); MALBAULT, Olivier, 91820 Boutigny sur Essonne (FR)
(74) Mandataire: Colombet, Alain André
(86) Numéro de dépôt international: PCT/FR2004/000896
(87) Numéro de publication internationale: WO 2004/092092

(56) Documents cités:
- EP-A- 0 792 850
- EP-A- 1 136 507
- EP-A- 1 136 508
- EP-A- 1 260 535
- EP-A- 1 260 536
- WO-A-95/16643
- FR-A- 2 776 285

## Description

La présente invention concerne les dispersants pour bétons, et plus particulièrement l'utilisation d'un dispersant de type polycarboxylique pour prolonger le maintien de fluidité de compositions de béton. Elle concerne également de telles compositions de béton.

Les dispersants sont utilisés dans la préparation de matériaux à prise hydraulique afin de réduire la teneur en eau, tout en conservant un maintien de fluidité et/ou une faible perte par affaissement pendant la durée nécessaire pour leur mise en forme.

Ces dispersants sont parfois désignés comme réducteurs d'eau, fluidifiants, plastifiants ou encore, lorsqu'ils sont mis en oeuvre avec un plus fort dosage, superplastifiants.

Ces additifs permettent d'obtenir des compositions de béton à la consistance souhaitée avec des teneurs réduites en eau et, par voie de conséquence, une amélioration de résistance mécanique des compositions de béton durci.

Ainsi, il est connu d'utiliser à titre de dispersants des composés gluconates ou lignosulfonates. Cependant, ces dispersants permettent d'obtenir des compositions de béton conservant leur fluidité pendant une durée limitée. Or lorsque le béton est préparé dans une centrale avant d'être acheminé sur le chantier sous forme prête à l'emploi, il est souhaitable de pouvoir conserver le maintien de fluidité pour une durée allant jusqu'à 60 minutes, mieux 90 minutes, voire au-delà.

Un dosage plus important en dispersant risque toutefois d'entraîner des retards de prise du béton incontrôlés.

Par ailleurs, ces dispersants présentent comme inconvénient d'être efficace qu'à des températures très limitées. Ainsi, on constate qu'ils conduisent à des résultats insatisfaisants à des températures élevées, par exemple de 30°C.

Enfin, il se révèle difficile d'obtenir une maniabilité satisfaisante lors de la mise en oeuvre de ces dispersants dans des compositions de béton comprenant des ciments dits avec ajouts. Ces ciments sont notamment utilisés pour les bétons de classe B25 à B40.

Ces dernières années, des dispersants à base de polycarboxylates ont été développés.

Ainsi, la demande FR 2 776 285 décrit des dispersants obtenus par estérification partielle d'un acide polycarboxylique avec un polyéther pour des compositions de ciment.

La demande de brevet EP 1 260 535 décrit des dispersants polycarboxyliques comportant des unités dérivées d'acide acrylique et de méthyléther de polyéthylène glycol. Le document suggère que ces dispersants puissent être intéressants pour le maintien de fluidité de compositions de béton transportés.

Le but de la présente invention est donc de proposer un dispersant permettant de prolonger le maintien de fluidité de compositions de béton ayant une valeur de slump comprise entre 12 et 20 cm.

Un autre but est de proposer un tel dispersant qui soit polyvalent, et notamment compatible avec des compositions de béton comportant différents types de

Un autre but est de proposer un tel dispersant qui soit efficace à une température comprise entre 2 et 30°C.

La présente invention repose sur la constatation que l'utilisation de polycarboxylates spécifiques dans les compositions de béton ayant une valeur de slump comprise entre 12 et 20 cm permet de prolonger significativement leur maintien de fluidité sans pour autant présenter les inconvénients des dispersants de l'art antérieur. ,

La valeur de slump permet d'évaluer la plasticité et donc la maniabilité d'une composition de béton. Elle est déterminée en mesurant l'affaissement d'un échantillon de béton humide coulé dans un récipient conique spécifique (cône d'Abrhams) puis démoulé. La valeur du slump diminue alors avec l'hydratation du béton, et le temps. Ainsi, on distingue des valeurs de slump à l'état frais (T0) de celles à 30, 60 ou 90 minutes.

Ainsi, on entend dans le cadre du présent exposé par le terme « maintien de fluidité » le fait qu'une composition de béton présente une valeur de slump après 90 minutes (T90) d'au moins 60%, de préférence 70% et encore mieux 80% de la valeur de slump à l'état frais (T0).

Plus précisément, l'invention a pour objet l'utilisation de polycarboxylates de polyoxyalkylène comprenant au moins 75% en nombre d'un enchaînement linéaire aléatoire d'unités structurelles (1) et (2) représentées par les formules suivantes : 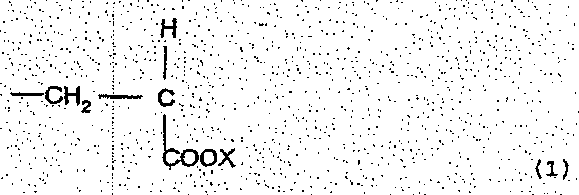 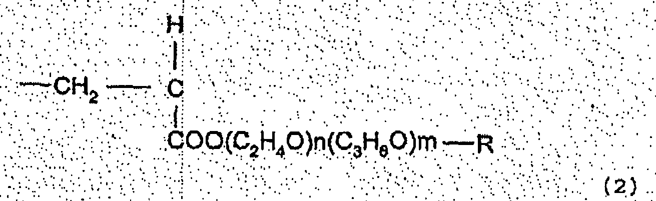 dans lesquelles X représente un atome d'hydrogène, un métal alcalin, un métal alcalino-terreux ou un ammonium, lesdites unités structurelles (1) pouvant être identiques ou différentes ; n est un nombre entier variant de 0 à 24, m est un nombre entier variant de 0 à 24 avec m<n, les groupes d'oxyde de propylène pouvant être distribués ou non de façon aléatoire parmi les groupes d'oxyde d'éthylène, R représente un groupe alkyle ou alcényle de 1 à 24, de préférence 1 à 18 atomes de carbone, les unités structurelles (2) étant obtenues par réaction avec un méthoxy polyéthylène glycol de masse moléculaire de 350 g/mole, le rapport du nombre d'unités structurelles (2), sur le nombre total des unités structurelles (1) et (2), étant compris entre 40 et 60%, seuls ou en mélange pour améliorer le maintien de fluidité de compositions de béton ayant une valeur de slump comprise entre 12 et 20 cm.

Le polycarboxylate de polyoxyalkylène peut renfermer en outre au plus 25% en nombre d'unités structurelles autres que les unités structurelles (1) et (2). De préférence, il s'agit d'unités structurelles dérivées de l'acide méthacrylique (1)' et (2)' 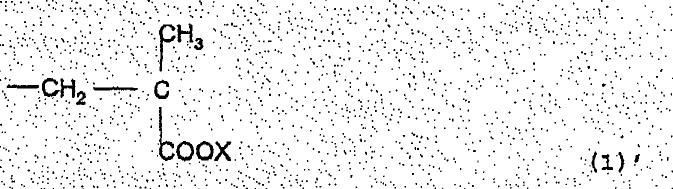 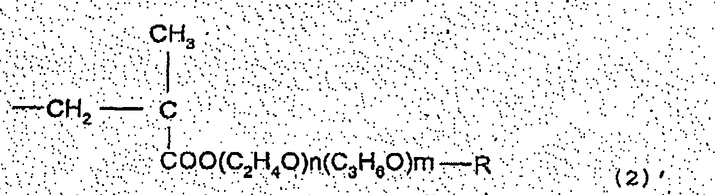 dans lesquelles n, m, X et R ont la signification donnée ci-dessus.

Avantageusement, le polycarboxylate de polyoxyalkylène comporte 5 à 45%, de préférence 5 à 20% en nombre d'unités structurelles (1)' et (2)'.

A titre d'exemple d'autres unités structurelles pouvant être présentes, on peut citer des unités formées à partir de monomères insaturés comprenant des groupements sulfonés ou des groupements d'esters d'alkyles. A titre de telles unités, on évitera cependant une présence excessive de monomères connus dans l'art pour engendrer un retard suffisamment marqué des temps de prise comme, par exemple, des monomères phosphonés ou phosphatés.

Conformément à une variante préférentielle de l'invention, le dispersant de type polycarboxylique comprend au moins 80%, de préférence au moins 90% en nombre d'unités structurelles (1) et (2) plus préférentiellement 95%, et tout particulièrement 100% en nombre d'unités structurelles (1) et (2), en ne prenant pas en compte les unités servant de terminaisons de chaîne liées aux méthodes d'amorçage de polymérisation et de contrôle de longueur de chaîne.

Le dispersant présente un rapport du nombre d'unités structurelles (2), qui correspondent à des esters des unités structurelles (1), sur le nombre total, des unités structurelles (1) et (2), qui est compris entre 40 et 60%. Les mêmes préférences s'appliquent aux unités structurelles (1)' et (2)' éventuellement présentes dans la limite de 25 % en nombre.

La masse molaire moyenne en poids MW du dispersant utilisé selon l'invention, mesurée par chromatographie d'exclusion stérique avec un étalonnage polyéthylène glycol varie généralement d'environ 7000 à 50000 g/mole.

Le dispersant est habituellement utilisé sous forme liquide.

Ainsi, selon un autre aspect de l'invention, le dispersant utilisé se présente sous forme de solution aqueuse de 20 à 40% d'extrait sec.

Avantageusement, la quantité de dispersant, additionné à la composition de béton, est comprise entre 0,2 et 0,8% en liquide, en particulier entre 0,25 et 0,75% en liquide, par rapport à la quantité de ciment.

L'indication « en liquide » se réfère à la quantité en poids de dispersant formulé. Ainsi, pour une formulation à 30 % d'extrait sec, le dispersant est généralement ajouté à raison de 0,05 à 0,3, de préférence 0,06 à 0,24, et en particulier 0,075 à 0,225 % en poids par rapport à la quantité de ciment.

Divers autres additifs connus de l'homme de l'art pour les compositions de béton peuvent entre outre être ajoutés à ces compositions de béton frais. A titre d'exemple, on peut citer des accélérateurs de prise, les entraîneurs d'air, les antimousses ou les retardateurs de prise.

Les compositions de béton peuvent comprendre à titre de liant hydraulique différents types de ciments, tels que par exemple les ciments CEM I, CEM II. Parmi ceux-ci, les ciments CEM I ne comportent pas d'ajouts. Il est néanmoins possible d'additionner des ajouts comme les laitiers, les cendres volantes, les fillers calcaire, les fillers siliceux à ces ciments. Les compositions de béton peuvent être des bétons de classes de résistances différentes, tel que les B25, les B30, les B35 ou encore les B40.

L'invention a également pour objet une composition de béton frais ayant une valeur de slump T0 comprise entre 12 et 20 comprenant le dispersant tel que décrit ci-dessus.

Divers procédés de fabrication du dispersant utilisés dans le cadre de l'invention peuvent être envisagés.

Selon un premier mode de fabrication, le dispersant sélectionné peut être obtenu par copolymérisation d'un monomère a représenté par la formule A suivante avec au moins un monomère b, sélectionné parmi les composés représentés par la formule B suivante. 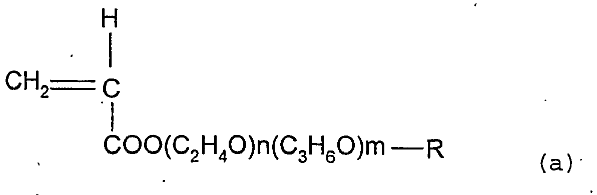 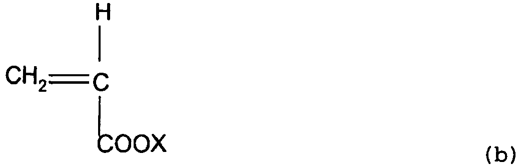 dans lesquelles X, n, m et R ont la signification donnée ci-dessus.

Selon un second mode de fabrication, le dispersant peut être obtenu par estérification partielle, catalysée à l'aide d'une base, par réaction d'un acide polyacrylique avec un polyéther contenant un groupe hydroxyle pouvant réagir avec une fonction carboxylique, éventuellement salifiée, dudit acide polyacrylique de formule générale :

HO-(C₂H₄O)ₙ(C₃H₆O)m-R

dans laquelle n, m et R sont tels que définis ci-dessus.

Dans le cadre du second mode de fabrication du dispersant, l'acide polyacrylique est obtenu par polymérisation d'un mélange de monomères comprenant au moins 50%, de préférence au moins 75% en mole d'acide acrylique et au plus 50%, de préférence au moins 25% en mole d'un co-monomère différent tel que l'acide méthacrylique. De préférence, il s'agit cependant de 80, 90, 95, et tout particulièrement de 100% en mole d'acide acrylique sans tenir compte des extrémités.

La base généralement utilisée pour catalyser la réaction d'estérification partielle est un hydroxyde de métal alcalin, de préférence du sodium ou du lithium. On peut cependant également mettre en oeuvre une autre base telle qu'une amine tertiaire.

Pour plus de détails concernant la préparation des dispersants, il est renvoyé à la demande de brevet FR 2 776 285.

Parmi ces procédés décrits, le procédé d'estérification partielle catalysée par une base est préféré. En effet, il semble que dans ce mode de fabrication la teneur en réactif résiduel soit très limitée.

Le dispersant tel que défini ci-dessus peut être utilisé seul ou en mélange. Il peut également être utilisé en combinaison avec d'autres dispersants habituels, comme par exemple ceux issus de la condensation du formaldéhyde et de naphtalène sulfonée ou ceux issus de la condensation du formaldéhyde et de mélamine sulfonée, dès lors que ceux-ci ne manifestent aucun effet significatif sur le maintien de fluidité.

Les exemples non limitatifs ci-après illustrent la présente invention.

### EXEMPLES

### Préparation des dispersants

### Premier mode de préparation

Selon le premier mode de préparation le dispersant est préparé par copolymérisation :
- d'acide acrylique, commercialisé par la société. Sigma Aldrich ;
- avec un méthacrylate de méthyle polyéthylène glycol, de masse molaire moyenne en poids variable commercialisé par la société Sigma Aldrich.

### Second mode de préparation

Selon le second mode de préparation par estérification partielle, catalysé à l'aide d'une base, le dispersant sélectionné est obtenu en faisant réagir :
- un acide polyacrylique de masse molaire moyenne en poids mesuré à 4000 g/mole dilué à 50% dans l'eau, indice d'acidité 333 mg KOH/g (Sokalan CP 10 S de chez BASF);
- ou un acide polyméthacrylique de masse molaire moyenne en poids mesuré à 4000 g/mole dilué à 30% dans l'eau et obtenu par polymérisation de l'acide méthacrylique en présence d'acides thioglycolique catalysés par de l'eau oxygénée ;
- avec un méthoxypolyéthylène glycol de masse molaire de 350 g/mole (polyglycol M350 de chez Clariant) ou de masse molaire de 1100 g/mole (polyglycol M1100 de chez Clariant).

### Dispersants

Des dispersants de type polycarboxylate de polyoxyde d'éthylène A-F, et, à titre de comparaison, les dispersants G et H, ont été préparés selon le second mode de préparation décrit ci-dessus. Leur composition massique est résumée dans le tableau 1 ci-après.

**Tableau 1 Composition massique des dispersants**

| Dispersants | %PAA | %MPEG | %LiOH | Taux d'ester |
|---|---|---|---|---|
| A | 61.10 | 38.18 | 0.76 | 30 |
| B | 57.41 | 41.87 | 0.71 | 35 |
| C | 4.05 | 45.28 | 0.67 | 40 |
| D | 51.27 | 48.09 | 0.64 | 45 |
| E | 48.68 | 50.72 | 0.60 | 50 |
| F | 46.33 | 50.10 | 0.57 | 55 |
| G | 68,04 | 31,512 | 0,448⁺ | 40 |
| H | 50,37 | 41,3 | 0,60 | 40 |

| | | | | |
|---|---|---|---|---|
| * PAA : Sokalan CP 10 S, sauf pour G : acide méthacrylique; ⁺ %NaOH ; MPEG - = polyglycol M350, sauf pour H polyglycol 1100 ; procédé de préparation selon FR 2 776 285. | | | | |

Le polymère ainsi obtenu est anhydre et manipulable à température ambiante.

### Formulation

Les dispersants ainsi obtenus sont ensuite formulés. On ajoute à 30% en poids de dispersant 0,5% en poids de Noramox 02 (CECA) à titre de tensioactif. On ajoute également 0,5% en poids de tributylphosphate à titre d'agent antimoussant. Le pré-mélange est neutralisé à l'aide de lessive de soude jusqu'à une valeur de pH de 7 avant d'être complété à 100% avec de l'eau.

### Exemple d'application

Les formulations des dispersants obtenues ci-dessus ont été incorporés dans une composition de béton B25 de référence ayant la composition suivante pour 1 m³ :

| | |
|---|---|
| Ciment CEM I 52.5 N | 230 Kg |
| Cendres volantes Cordemais | 90 Kg |
| Palvadeau 12.5/20 | 474.5 Kg |
| Palvadeau 8/12.5 | 316 Kg |
| Palvadeau 4/8 | 252.2 Kg |
| Palvadeau 0/4 (% hum. = 3.9%) | 643 Kg |
| Eau | 175 Kg |

Afin d'évaluer la robustesse des dispersants, deux ciments de nature chimique différente ont été utilisés, à savoir le CEM I 52.5 N Saint Pierre La Cour et le CEM I 52.5 Le Havre. Les bétons sont réalisés suivant la norme NF EN 206-1 et T0 correspond au slump juste après la fin du malaxage qui de 55 secondes après ajout de l'eau.

A titre de comparaison, on a effectué les mêmes mélanges avec des plastifiants disponibles dans le commerce, le Chrysoplast CER, à base de gluconate de sodium (noté CER) et le Chrysoplast 209, à base de lignosulfonate de calcium (noté 209), disponibles chez Chryso.

Les tableaux 2 et 3 ci-après indiquent pour chacunes des formulations de dispersant utilisées, le dosage, le rapport E/L et les valeurs de slump immédiatement après préparation (béton frais) (T0), à 30 minutes (T30), à 60 minutes (T60) et à 90 minutes (T90).

Après 24 heures la résistance Rc des pièces obtenues a été déterminée à 10°C (norme NF P18-421).

L'ensemble des résultats est porté dans le tableau 2 pour le ciment CEM I 52.5 N Saint Pierre La Cour et au tableau 3 pour le ciment CEM I 52.5 N Le Havre.

**Tableau 2 Béton à base de ciment CEM I 52.5 N Saint Pierre La Cour**

| Formule | Dosage (%) | E/L | Slump T0 | Slump T30 | Slump T60 | Slump T90 | Rc 24h à 10°C (Mpa) |
|---|---|---|---|---|---|---|---|
| 209 | 0.3 | 0.566 | 14.5 | 9.5 | 8 | 5.5 | 5.8 |
| CER | 0.3 | 0.566 | 16.5 | 11 | 9 | 8.5 | 4.8 |
| A | 0.3 | 0.558 | 15.5 | 14.5 | 13 | 10 | * |
| B | 0.3 | 0.582 | 16 | 16 | 16 | 15.5 | 4 |
| c | 0.3 | 0.566 | 15.5 | 14.5 | 15.5 | 14.5 | 4.22 |
| D | 0.3 | 0.566 | 15.5 | 14 | 13.5 | 12.5 | 4.32 |
| E | 0.3 | 0.566 | 15 | 15 | 15 | 15 | 7.4 |
| F | 0.3 | 0.583 | 16 | 14 | 13 | 10 | * |
| G | 0.3 | 0.514 | 15.5 | 13 | 10.5 | 9 | 3.9 |
| H | 0.3 | 0.561 | 16 | 11 | 8 | 8 | 4.01 |

**Tableau 3 Béton à base de ciment CEM I 52.5 N Le Havre**

| Formule | Dosage (%) | E/L | Slump T0 | Slump T30 | Slump T60 | Slump T90 | Rc 24 h à 10°C (Mpa) |
|---|---|---|---|---|---|---|---|
| 209 | 0.3 | 0.566 | 15.5 | 11 | 7.5 | 5.5 | 4.0 |
| CER | 0.3 | 0.547 | 16.5 | 12.5 | 9.5 | 7 | 2.3 |
| A | 0.3 | | | | | | |
| B | 0.3 | 0.556 | 17.5 | 16.5 | 16 | 11 | 3.72 |
| c | 0.3 | 0.531 | 15.5 | 14 | 13 | 11 | 3.75 |
| D | 0.3 | 0.566 | 16 | 15.5 | 12.5 | 12 | 3.13 |
| E | 0.3 | 0.547 | 16 | 16.5 | 14 | 12 | 5.0 |
| F | 0.3 | | | | | | |
| G | 0.3 | 0.521 | 15.5 | 13 | 10 | 8.5 | 4.2 |
| H | 0.3 | 0.529 | 15.5 | 10 | <6 | <6 | 3.83 |

Les résultats mettent clairement en évidence que comparés à des dispersants classiques et dans des conditions opératoires comparables, les dispersants A à F permettent de prolonger notablement le maintien de la fluidité du béton. Ainsi, on constate que même après 90 minutes, les valeurs de slump mesurées représentent encore au moins 60% de la valeur de slump mesurée à l'état frais. Généralement, ce ratio avoisine les 80%.

Par ailleurs, on constate que les dispersants utilisés selon l'invention n'affectent pas les autres propriétés du béton. Notamment, ils permettent de conserver les valeurs de résistance Rc à 24 h comparables, voire supérieures à celles obtenues avec les dispersants conventionnels.

On constate également que les résultats sont tout à fait satisfaisants pour les différents types de ciment testés. Ainsi, l'utilisation de ces dispersants n'est pas limitée à un type de ciment particulier, mais ils sont robustes et peuvent être mis en oeuvre pour des compositions de béton comportant des ciments de nature chimique différente.

Aussi, il apparaît que la présence de motifs d'acide acrylique a un effet bénéfique en termes de maintien de fluidité des bétons. En effet, le dispersant G, préparé avec de l'acide méthacrylique, présente, à dosage et valeur de slump initial identique, des valeurs de slump T60 et T90 plus faibles que les dispersants A à F.

Enfin, la présence de chaînes polyalkoxylènes courtes dans les dispersants semble également contribuer au maintien de fluidité. Ainsi, le dispersant H à chaînes polyalkoxylène de masse molaire de 1100 g/mole, assure un maintien de fluidité plus faible comparé au dispersant C par exemple, toujours à dosage identique.

## Revendications

1. Utilisation de polycarboxylates de polyoxyalkylène comprenant au moins 75% en nombre d'un enchaînement linéaire aléatoire d'unités structurelles (1) et (2) représentées par les formules suivantes : 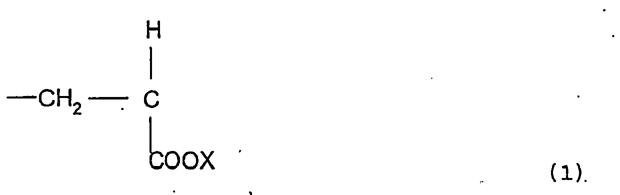 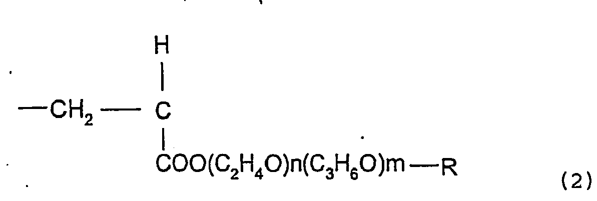 dans lesquelles X représente un atome d'hydrogène, un métal alcalin, un métal alcalino-terreux ou un ammonium, lesdites unités structurelles (1) pouvant être identiques ou différentes ; n est un nombre entier variant de 0 à 24, m est un nombre entier variant de 0 à 24 avec m<n, les groupes d'oxyde de propylène pouvant être distribués ou non de façon aléatoire parmi les groupes d'oxyde d'éthylène, R représente un groupe alkyle ou alkényle de 1 à 24 atomes de carbone, les unités structurelles (2) étant obtenues par réaction avec un méthoxy polyéthylène glycol de masse molaire de 350 g/mole, le rapport du nombre d'unités structurelles (2) sur le nombre total des unités structurelles (1) et (2) étant compris entre 40 et 60 %, seuls ou en mélange, pour améliorer le maintien de fluidité de compositions de béton ayant une valeur de slump T0 comprise entre 12 et 20 cm.

2. Utilisation selon la revendication 1, dans laquelle les polycarboxylates de polyoxyalkylène comprennent au moins 80% en nombre d'un enchaînement linéaire'aléatoire d'unités structurelles (1) et (2).

3. Utilisation selon l'une des revendications 1 à 2, dans laquelle le polycarboxylate de polyoxyalkylène présente en outre au plus 25 % en nombre d'unités structurelles (1)' et (2)' représentées par les formules suivantes : 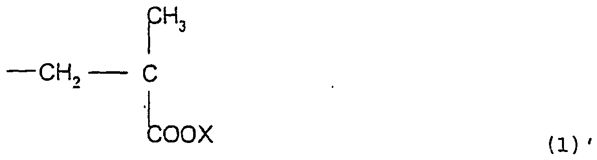 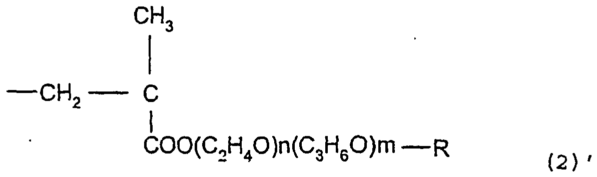 dans lesquelles n, m, X et R ont la signification donnée à la revendication 1 et le rapport du nombre d'unités structurelles (2)' sur le nombre total des unités structurelles (1)' et (2)' étant compris entre 40 et 60%.

4. Utilisation selon la revendication 3, dans laquelle le polycarboxylate de polyoxyalkylène présente 5 à 20 % en nombre d'unités structurelles (1)' et/ou (2)'.

5. Utilisation selon l'une des revendications 1 à 4, dans laquelle le polycarboxylate de polyoxyalkylène présente une masse moléculaire est comprise entre 7000 et 50000 g/mol.

6. Utilisation selon l'une des revendications 1 à 5, dans laquelle le polycarboxylate de polyoxyalkylène se présente sous forme de solution aqueuse à 20 à 40% d'extrait sec.

7. Utilisation selon l'une des revendications 1 à 16, dans laquelle le polycarboxylate de polyoxyalkylène est ajouté à la composition de béton à raison de 0,2 à 0,8% en liquide par rapport au ciment.

8. Composition de béton frais ayant une valeur de slump T0 de 12 à 20 et comprenant le dispersant spécifié dans les revendications 1 à 17.

## Claims

1. Use of polyoxyalkylene polycarboxylates comprising at least 75% by number of a random linear chain of structural units (1) and (2) represented by the following formulae: 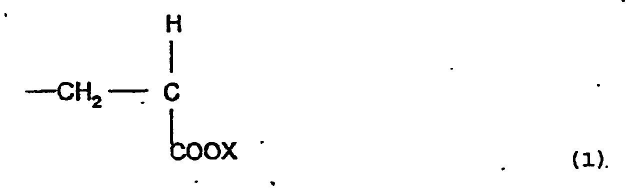 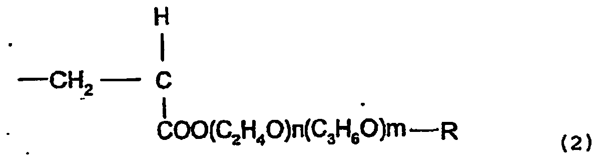 in which X represents a hydrogen atom, an alkali metal, an alkaline earth metal or ammonium, it being possible for said structural units (1) to be identical or different; n is an integer from 0 to 24, m is an integer from 0 to 24 with m < n, it being possible for the propylene oxide groups to be distributed or not in a random manner among the ethylene oxide groups, R represents an alkyl or alkenyl group having from 1 to 24 carbon atoms, the structural units (2) being obtained by reaction with a methoxy polyethylene glycol of molar mass 350 g/mol, the ratio of the number of structural units (2) to the total number of structural units (1) and (2) being from 40 to 60%, on their own or in admixture, for improving the fluidity retention of concrete compositions having a slump value T0 of from 12 to 20 cm.

2. Use according to claim 1, in which the polyoxyalkylene polycarboxylates comprise at least 80% by number of a random linear chain of structural units (1) and (2).

3. Use according to either claim 1 or claim 2, in which the polyoxyalkylene polycarboxylate further comprises not more than 25% by number of structural units (1)' and (2)' represented by the following formulae: 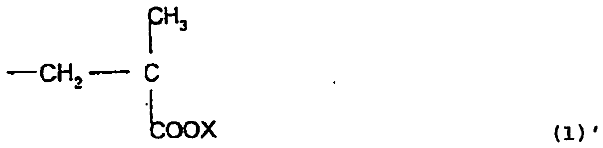 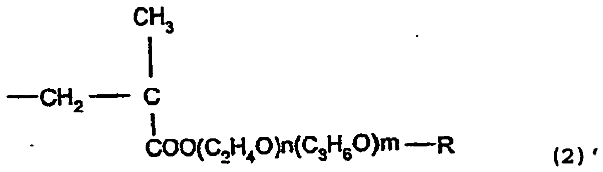 in which n, m, X and R have the meaning given in claim 1 and the ratio of the number of structural units (2)' to the total number of structural units (1)' and (2)' being from 40 to 60%.

4. Use according to claim 3, in which the polyoxyalkylene polycarboxylate comprises from 5 to 20% by number of structural units (1)' and/or (2)'.

5. Use according to any one of claims 1 to 4, in which the polyoxyalkylene polycarboxylate has a molecular mass of from 7000 to 50,000 g/mol.

6. Use according to any one of claims 1 to 5, in which the polyoxyalkylene polycarboxylate is in the form of an aqueous solution having a solids content of from 20 to 40%.

7. Use according to any one of claims 1 to 6, in which the polyoxyalkylene polycarboxylate is added to the concrete composition at the rate of from 0.2 to 0.8% of liquid, based on the cement.

8. Fresh concrete composition having a slump value T0 of from 12 to 20 and comprising the dispersant specified in claims 1 to 7.

## Patentansprüche

1. Verwendung von Polyoxyalkylen-polycarboxylaten, die wenigstens 75 Zahlen-% einer linearen zufälligen Verkettung von strukturellen Einheiten (1) und (2), dargestellt durch die folgenden Formeln, umfassen: 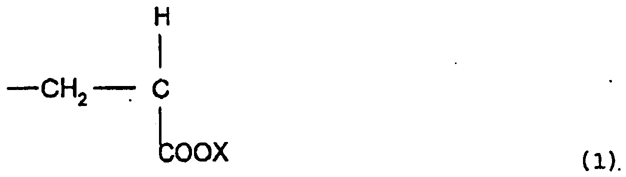 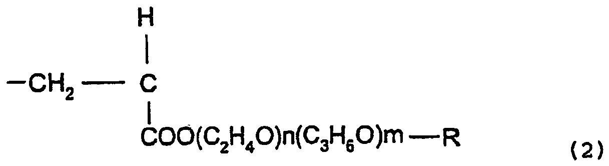 in denen X ein Wasserstoffatom, ein Alkalimetall, ein Erdalkalimetall oder ein Ammonium darstellt, wobei die strukturellen Einheiten (1) identisch oder unterschiedlich sein können; n eine ganze Zahl von 0 bis 24 ist, m eine ganze Zahl von 0 bis 24 ist, wobei m < n, wobei die Propylenoxid-Gruppen in zufälliger Art oder nicht unter den Ethylenoxid-Gruppen verteilt sein können, R eine Alkyl- oder Alkylen-Gruppe mit 1 bis 24 Kohlenstoffatomen darstellt, wobei die strukturellen Einheiten (2) durch Umsetzung mit einem Methoxypolyethylenglykol mit einer Molmasse von 350 g/mol erhalten werden, das Verhältnis der Anzahl von strukturellen Einheiten (2) zur Gesamtheit der strukturellen Einheiten (1) und (2) zwischen 40 und 60 % liegt, allein oder im Gemisch, um die Aufrechterhaltung der Fluidität von Betonzusammensetzungen, die einen Slump-Wert von zwischen 12 und 20 cm haben, zu verbessern.

2. Verwendung gemäß Anspruch 1, wobei die Polyoxyalkylen-polycarboxylate wenigstens 80 Zahlen-% einer linearen zufälligen Verkettung von strukturellen Einheiten (1) und (2) umfassen.

3. Verwendung gemäß einem der Ansprüche 1 bis 2, wobei das Polyoxyalkylen-polycarboxylat außerdem höchstens 25 Zahlen-% an strukturellen Einheiten (1)' und (2)' aufweist, die durch die folgenden Formeln dargestellt werden: 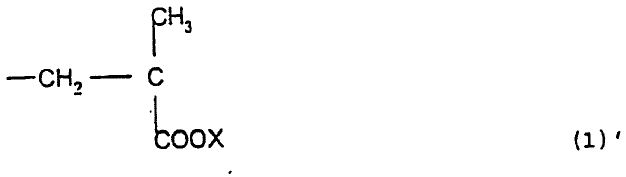 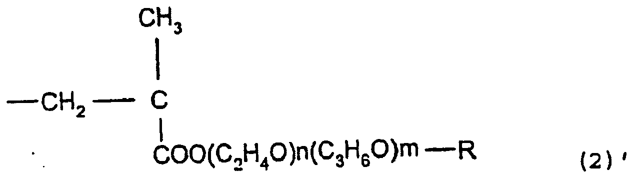 in denen n, m, X und R die in Anspruch 1 angegebene Bedeutung haben, und wobei das Verhältnis der Anzahl der strukturellen Einheiten (2)' zu der Gesamtzahl der strukturellen Einheiten (1)' und (2)' zwischen 40 und 60 % liegt.

4. Verwendung gemäß Anspruch 3, wobei das Polyoxyalkylen-polycarboxylat 5 bis 20 Zahlen-% an strukturellen Einheiten (1)' und/oder (2)' aufweist.

5. Verwendung gemäß einem der Ansprüche 1 bis 4, wobei das Polyoxyalkylen-polycarboxylat eine Molekülmasse aufweist, die zwischen 7 000 und 50 000 g/mol liegt.

6. Verwendung gemäß einem der Ansprüche 1 bis 5, wobei das Polyoxyalkylen-polycarboxylat sich in Form einer wässrigen Lösung mit 20 bis 40 % Trockenextrakt präsentiert.

7. Verwendung gemäß einem der Ansprüche 1 bis 6, wobei das Polyoxyalkylen-polycarboxylat der Betonzusammensetzung mit 0,2 bis 0,8 % als Flüssigkeit, bezogen auf den Zement, zugesetzt wird.

8. Frische Betonzusammensetzung, die einen Slump-Wert T0 von 12 bis 20 hat und das in den Ansprüchen 1 bis 7 spezifizierte Dispersionsmittel umfasst.
